# EUROPEAN PATENT APPLICATION

(11) **EP 1 981 235 A2**
(43) Date of publication of application: **15.10.2008**
(21) Application number: 08251389.6
(22) Date of filing: 10.04.2008
(51) Int. Cl.: H04L 27/06

(54) **ASK demodulator with multiple operating modes**

(30) Priority: 10.04.2007 US 733754
(71) Applicant: Micrel, Inc., San Jose, CA 95131 (US)
(72) Inventor: Pettersen, Fred-Johan, N-0319 Oslo (NO)
(74) Representative: Powell, Stephen David

(57) **Abstract**

A demodulator for demodulating an amplified shift keyed (ASK) signal includes an envelope detector (12) generating an envelope signal, a low-pass filter (R1, C1) generating a filtered envelope signal, a switch (S1) coupled to disengage the low-pass filter in response to a first control signal, a comparator (20) with hysteresis comparing the envelope signal and the filtered envelope signal. In operation, the switch is open or closed in response to the first control signal to cause the demodulator to operate in one of multiple operation modes. In one operation mode, the demodulator uses a small capacitor to form a low-pass filter having a cut-off frequency equal to or greater than the bit-rate of the ASK signal and the demodulator receives an ASK signal having any coding pattern, including ASK signals having unequal number of 1's and 0's.

## Description

### FIELD OF THE INVENTION

The invention relates to demodulators for demodulating radio frequency signals and, in particular, to a demodulator for demodulating amplitude shift keyed (ASK) data signals.

### DESCRIPTION OF THE RELATED ART

Amplitude shift keying (ASK) is a form of modulation which represents digital data as variations in the amplitude of a carrier wave. The simplest and most common form of ASK is referred to as on-off keying (OOK) where the ASK modulation operates as a switch, using the presence of a carrier wave to indicate a binary one and its absence to indicate a binary zero. In other words, the data bits of an ASK signal are each characterized by either an absence of pulses or a burst of pulses at a predetermined frequency. Amplitude-shift keying requires a high signal-to-noise ratio for their recovery, as by their nature much of the signal is transmitted at reduced power. The advantage of ASK radio systems is the simplicity of the transceiver topology and low current consumption.

Demodulators for amplitude shift keyed signals (ASK signals) are typically implemented as edge or envelope detectors. The demodulation process includes basically two steps: recovery of the transmitted bit stream and regeneration of the binary bit stream. For example, the incoming ASK signal may be first amplified at the receiver, mixed down to a lower frequency or directly to the baseband frequency and is then applied to an edge or envelope detector. The data content of the transmitted signal is thus recovered from the transmitted bit stream. More specifically, the edge or envelope detector produces an envelope of the amplified signal. To extract the binary bit stream from the detected envelope, a comparator is used to compare the envelope signal with a prescribed threshold and produce a pulse signal corresponding to each received burst of pulses in the received ASK signal.

Conventional demodulators require the use of a large capacitor to meet the operating requirements of the demodulator. When the demodulator is implemented in an integrated circuit, the capacitor often has to be provided as an external capacitor because it is very costly to incorporate large capacitors in integrated circuits. The use of external capacitors increases the printed circuit board space and ultimately the system cost of the ASK receiver or transceiver.

### SUMMARY OF THE INVENTION

According to a first aspect of the present invention, a demodulator for demodulating an amplified shift keyed (ASK) signal to provide a digital output signal indicative of the ASK signal includes an envelope detector having an input terminal receiving the ASK signal and an output terminal generating an envelope signal indicative of the data content encoded in the ASK signal; a low-pass filter coupled to receive the envelope signal and generating a filtered envelope signal; a switch coupled to disengage the low-pass filter in response to a first control signal; and a comparator with hysteresis having a non-inverting input terminal coupled to receive the envelope signal, an inverting input terminal coupled to a first terminal and receiving the filtered envelope signal, and an output terminal providing the digital output signal. In operation, the switch is open or close in response to the first control signal to cause the demodulator to operate in one of a plurality of operation modes.

In one embodiment, the low-pass filter includes a first resistor having a first resistance value coupled between the output terminal of the envelope detector and a first node; and a capacitor having a first capacitance value coupled between the inverting input terminal of the comparator and a ground node. The switch is coupled between the first node and the inverting input terminal of the comparator.

In another embodiment the low-pass filter includes a first resistor having a first resistance value coupled between a first node and the inverting input terminal of the comparator; and a capacitor having a first capacitance value coupled between the inverting input terminal of the comparator and a ground node, wherein the switch is coupled between the output terminal of the envelope detector and the first node.

In the above embodiments, a first operation mode may be selected by closing the switch and coupling a second capacitor having a second capacitance value to the first terminal, the second capacitance value being much greater than the first capacitance value.

In a preferred embodiment the resistor, the first capacitor and the second capacitor form a low-pass filter, the cut-off frequency of the low-pass filter being low as compared to the bit rate of the ASK signal, the low-pass filter providing a filtered envelope signal to the inverting input terminal of the comparator.

In the preferred embodiments the first operation mode is applied when the ASK signal has approximately equal numbers of 1's and 0's.

Alternatively in the above-mentioned embodiments a second operation mode may be selected by closing and opening the switch periodically and coupling a second capacitor having a second capacitance value to the first terminal, the second capacitance value being much greater than the first capacitance value.

The second operation mode may be applied for any coding pattern of the ASK signal where the ASK signal may or may not have approximately equal numbers of 1's and 0's.

In the above embodiments, a third operation mode may be selected by closing the switch.

The resistor and the first capacitor may form a low-pass filter, the cut-off frequency of the low-pass filter being at the bit rate of the ASK signal or at higher frequencies than the bit rate of the ASK signal, the low-pass filter providing a filtered envelope signal to the inverting input terminal of the comparator.

The third operation mode may be applied for any coding pattern of the ASK signal where the ASK signal may or may not have approximately equal numbers of 1's and 0's.

The demodulator may comprise an analog-to-digital converter coupled to the output terminal of the envelope detector, the analog-to-digital converter providing a digitized envelope signal, wherein the low-pass filter comprises a digital low-pass filter and the comparator with hysteresis comprises a digital comparator with hysteresis. Preferably the digital low-pass filter and the digital comparator with hysteresis are implemented in software.

According to another aspect of the present invention, a method for demodulating an amplitude shift keyed (ASK) signal and generating a digital output signal includes receiving an ASK signal; detecting the envelope of the ASK signal; generating an envelope signal indicative of the data content of the ASK signal; low-pass filtering the envelope signal to generate a filtered envelope signal, the low-pass filtering having a selectable cut-off frequency; coupling the envelope signal to a non-inverting input terminal and selectively coupling the filtered envelope signal to an inverting input terminal of a comparator with hysteresis; and generating the digital output signal at an output terminal of the comparator indicative of the data content of the ASK signal.

In a preferred method low-pass filtering the envelope signal to generate a filtered envelope signal comprises low-pass filtering at a cut-off frequency being at or greater than the bit rate of the ASK signal; and selectively coupling the filtered envelope signal to an inverting input terminal of a comparator with hysteresis comprises coupling the filtered envelope signal to the inverting input terminal of a comparator with hysteresis.

In another preferred method low-pass filtering the envelope signal to generate a filtered envelope signal comprises low-pass filtering at a cut-off frequency being lower than the bit rate of the ASK signal; and selectively coupling the filtered envelope signal to an inverting input terminal of a comparator with hysteresis comprises coupling the filtered envelope signal to the inverting input terminal of a comparator with hysteresis.

In the above methods, preferably the step of receiving an ASK signal comprises receiving an ASK signal having any coding pattern where the ASK signal may or may not have approximately equal numbers of 1's and 0's.

The present invention is better understood upon consideration of the detailed description below and the accompanying drawings.

### BRIEF DESCRIPTION OF THE DRAWINGS

Figure 1 is a schematic diagram of a demodulator for amplified shift keyed signals according to one embodiment of the present invention.
Figure 2 illustrates a data bit stream and the corresponding ASK signal as well as the corresponding envelope signal and the digital output signal of the ASK demodulator of Figure 1.
Figure 3 illustrates an exemplary envelope signal and the associated filtered signal provided as input signals to the comparator of the ASK demodulator of Figure 1.
Figure 4 is a schematic diagram of a demodulator for amplified shift keyed signals according to a second embodiment of the present invention.
Figure 5 is a schematic diagram of a demodulator for amplified shift keyed signals according to a third embodiment of the present invention.

### DETAILED DESCRIPTION OF THE PREFERRED EMBODIMENTS

In accordance with the principles of the present invention, an ASK demodulator for receiving an amplitude shift keyed (ASK) data signal and converting the ASK signal into a digital output signal implements multi-mode operation for handling ASK signals with different signal characteristics. More specifically, the operating modes of the ASK demodulator allows the demodulator to operate on an ASK signal that does not have approximately equal number of 1's and 0's in the transmitted data message. The demodulator can also operate in the classical mode where the ASK signal has approximately equal number of 1's and 0's.

A salient feature of the ASK demodulator of the present invention is that the ASK demodulator operates without the need for a large capacitance. A large integrated capacitor or an off-chip capacitor is not required for the operation of the demodulator but can be optionally added. Eliminating the need for a large capacitor reduces fabrication cost or system cost for implementing the demodulator. The multi-mode operation of the ASK demodulator provides flexibility and allows a large capacitor to be optionally added if desired by the user. The advantages of the ASK demodulator of the present invention include reduced complexity for the user, reduced printed circuit board area and reduced system cost since no external capacitor is required to implement the demodulator.

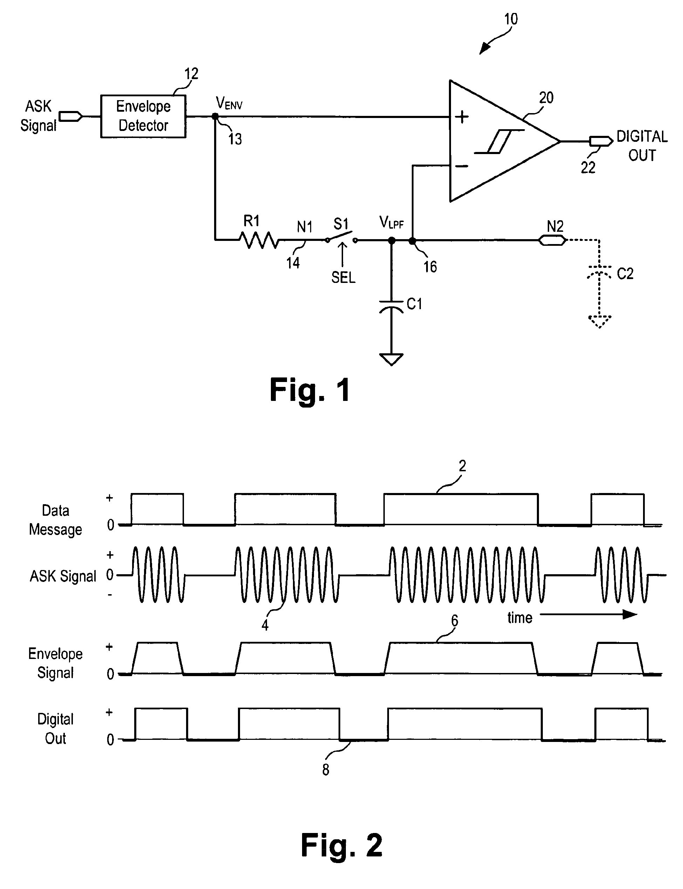

Figure 1 is a schematic diagram of a demodulator for amplified shift keyed signals according to one embodiment of the present invention. Referring to Figure 1, an ASK demodulator for demodulating an amplifier shift keyed signal (ASK signal) includes an envelope detector 12, a comparator with hysteresis 20, a switch S1 and a first order low-pass filter formed by a resistor R1 and a capacitor C1. ASK demodulator 10 receives an incoming ASK signal in which the amplitude of a carrier oscillation is switched between two states in accordance with a binary data message. ASK demodulator 10 generates a digital output signal indicative of the binary data message encoded in the ASK signal.

Figure 2 provides the signal profiles of various signals in ASK demodulator 10 to illustrate the operation of ASK demodulator 10. Referring to Figure 2, a data message 2 to be transmitted is a binary bit stream of 1's and 0's at a predetermined frequency. An ASK signal 4 is formed by modulating a carrier signal with the binary bit stream of the data message. The carrier oscillation has a frequency much higher than the frequency of the data message. As a result, the ASK signal includes bursts of pulses when the data message is a "1" and no pulses when the data message is a "0". The envelope detector 12 generates an envelope signal V_{ENV} 6 from the incoming ASK signal 4. Finally, as will be described in more detail below, comparator 20 generates the digital output signal 8 indicative of the data message from the envelope signal 6.

The incoming ASK signal is received by the envelope detector 12 to generate an envelope signal V_{ENV} (node 13) indicative of the data content of the ASK signal. Envelope detector 12 can be implemented using any conventional envelope detector or edge detector circuits, presently known or to be developed. The envelope signal V_{ENV} is coupled to the non-inverting input terminal of comparator 20 as an input signal.

In ASK demodulator 10, resistor R1 is connected between the output of the envelope detector (node 13) and a node 14 (also denoted as node N1). Switch S1 is connected between node N1 and a node 16 (also denoted as node N2) which is also the inverting input terminal of comparator 20. Capacitor C1 is connected between the inverting input terminal (node 16) of comparator 20 and the ground node. Switch S1 is controlled by a model select signal SEL to select one of three operating modes for ASK demodulator 10. When switch S1 is closed, resistor R1 and capacitor C1 forms a first order low-pass filter. Capacitor C1 has a small capacitance value to keep the cut-off frequency of the low-pass filter high and also to keep the bandwidth of the demodulator high. Because capacitor C1 has a small capacitance value, capacitor C1 can be formed as an integrated or on-chip capacitor when ASK demodulator 10 is formed in an integrated circuit.

In ASK demodulator 10, node N2 is a terminal to which a capacitor, such as capacitor C2, may be optionally coupled. When ASK demodulator 10 is formed as an integrated circuit, node N2 is an I/O terminal of the integrated circuit chip and capacitor C2 is an external or off-chip capacitor which can be optionally coupled to node N2.
In Figure 1, the key components of ASK demodulator 10 are shown. Figure 1 is illustrative only and in actual implementations, ASK demodulator 10 may include other circuit components not shown in Figure 1. For instance, in actual implementations, ASK demodulator 10 may include power-down circuitry to turn off the demodulator when no incoming signal is detected. ASK receivers are typically programmed to enter a sleep mode except when an expected signal is present.

In the present embodiment, ASK demodulator 10 has three operation modes. The three operation modes are selected by the switching action of switch S1 and also by the cut-off frequency (F_{co}) of the low-pass filter formed by resistor R1 and capacitor C1. The three operation modes are characterized as follows:

| Mode | Switch State | F_{co} | Coding Pattern |
|---|---|---|---|
| 1 | Always On | Significantly lower than bit-rate | Require input ASK signal with approx. equal numbers of 1's and 0's. |
| 2 | Initially On, then Off | Significantly lower than bit-rate | Does not require equal numbers of 1's and 0's in ASK signal. |
| 3 | Always On | From bit-rate to significantly higher frequencies | Does not require equal numbers of 1's and 0's in ASK signal. |

Regardless of the operation modes, comparator 20 with hysteresis compares the envelope signal V_{ENV} on node 13 to the filtered signal V_{LPF} on node 16. In the present embodiment, comparator 20 has a high and a low voltage comparison threshold. The difference between the high and low voltage comparison thresholds is a hysteresis voltage value of V_{hys}. Thus, comparator 20 will switch from a logical low "0" to a logical high "1" when the voltage at the non-inverting input terminal (node 13) is higher than the voltage at the inverting input terminal (node 16) by the hysteresis voltage value V_{hys}. Moreover, comparator 20 will switch from a logical high "1" to a logical low "0" when the voltage at the non-inverting input terminal (node 13) is lower than the voltage at the inverting input terminal (node 16) by the hysteresis voltage value V_{hys}. Comparator 20 can be implemented using any comparator with hysteresis circuitry, currently known or to be developed.

The three operation modes of ASK demodulator 10 will now be described in detail. In operation mode 1, switch S1 is turned on (closed) and resistor R1 is electrically connected to capacitor C1 to form a low-pass filter. Mode 1 is the classical operation mode for ASK modulators and requires the input ASK signal to have approximately equal numbers of 1's and 0's. To operate in the classical ASK demodulation mode, the lowest frequency component of the ASK signal must also be significantly higher than the cut-off frequency of the low-pass filter of the demodulator. In other words, the cut-off frequency of the low-pass filter of ASK demodulator 10 must be significantly lower than the bit-rate of the ASK signal. The requirement for a low cut-off frequency dictates a large capacitance value in the low-pass filter. Therefore, to operate in mode 1, a capacitor C2 having a large capacitance value is to be coupled between node N2 and ground. Capacitor C2 is thus coupled in parallel to capacitor C1. Resistor R1 with capacitors C1 and C2 set the cut-off frequency of the ASK demodulator 10 to a sufficiently low value.

When operated under mode 1, the hysteresis voltage value of comparator 20 is significantly smaller than the voltage swing of the envelope signal V_{ENV} or the filtered signal V_{LPF}. More specifically, the low-pass filter formed by resistor R1 and capacitors C1 and C2 operates to generate a DC voltage signal based on the envelope signal V_{ENV} but having a voltage value about half way between the voltage levels of the logical high and logical low signals. Therefore, the envelope signal V_{ENV} will always have a voltage value that is greater than or less than the filtered signal V_{LPF} by more than the hysteresis voltage V_{hys}.

Under mode 1 operation, comparator 20 generates a digital output signal of logical "1" when the envelope signal V_{ENV} is at a logical high and generates a digital output signal of logical "0" when the envelope signal V_{ENV} is at a logical low.

Operation mode 2 is similar to operation mode 1 in that a capacitor C2 with a large capacitance value is to be coupled between node N2 and ground for setting the cut-off frequency of the low-pass filter to be much lower than the bit rate of the incoming ASK signal. Operation mode 2 has two phases. During phase 1 of operation mode 2, switch S1 is initially turned on (closed) and resistor R1 is electrically connected to capacitor C1 and capacitor C2 to form a low-pass filter having a low cut-off frequency as compared to the bit rate of the input ASK signal.

When the filtered signal V_{LPF} has settled, operation mode 2 enters phase 2 where switch S1 is opened and the voltage value stored on capacitors C1 and C2 is used as the reference for comparator 20. The low-pass filter of resistor R1 and capacitor C1 is thus disengaged. The reference voltage for comparator 20 is also referred to as a sampled reference as the reference voltage for comparator 20 is sampled and then stored. By sampling the reference voltage, the input ASK signal no longer affects the reference voltage at the inverting input terminal of comparator 20. Thus, in operation mode 2, there is no requirement that the input ASK signal must have approximately equal number of 1's and 0's.

ASK demodulator 10 can remains in phase 2 of operation mode 2 as long as the reference voltage at node 16 sampled by capacitors C1 and C2 remains stable. The reference voltage will drift overtime due to leakage currents and therefore the sampled reference needs to be periodically refreshed. Thus, in operation mode 2, switch S1 will close periodically to resample the reference voltage at node 16.

In operation modes 1 and 2, the hysteresis provided by comparator 20 increases the noise immunity of the ASK demodulator 10. For instance, if there is noise on the envelope signal V_{ENV}, the noise could result in undesired and erroneous glitches in the comparator output signal when the noise of the envelope signal crosses the comparator threshold if the comparator does not have hysteresis. When comparator 20 is implemented with hysteresis, the comparator digital output signal would not change state unless the envelope signal V_{ENV} has increased or decreased beyond the upper or lower hysteresis threshold.

In operation mode 3, switch S1 is turned on (closed) and resistor R1 is electrically connected to capacitor C1 to form a low-pass filter. No additional capacitor is required for operation in mode 3. ASK demodulator 10 can thus be formed entirely in a single integrated circuit without any external components. Because capacitor C1 has a relatively low capacitance value, the cut-off frequency of the low-pass filter can have a value from bit-rate up to higher frequencies.

There are two requirements for operation in mode 3. First, the slew rate for the filtered signal V_{LPF} must be lower than the slew rate of the envelope signal V_{ENV} to ensure that a voltage difference larger than the hysteresis voltage V_{hys} can be realized. Second, the signal amplitude of the envelope signal V_{ENV} must be larger than the hysteresis voltage V_{hys}. Since the bandwidth requirement for the low-pass filter of resistor R1 and capacitor is not stringent, capacitor C1 can have a small capacitance value and be formed as an integrated or on-chip capacitor.

Furthermore, operation mode 3 relies on the difference between the envelope signal and the filtered signal and the hysteresis of the comparator to establish the reference level for the comparator. Therefore, there is no requirement that the input ASK signal must have approximately equal number of 1's and 0's. More specifically, the reference level for comparator 20 is not affected by the data content of the ASK signal and therefore mode 3 can operate with any coding pattern used in the ASK signal.

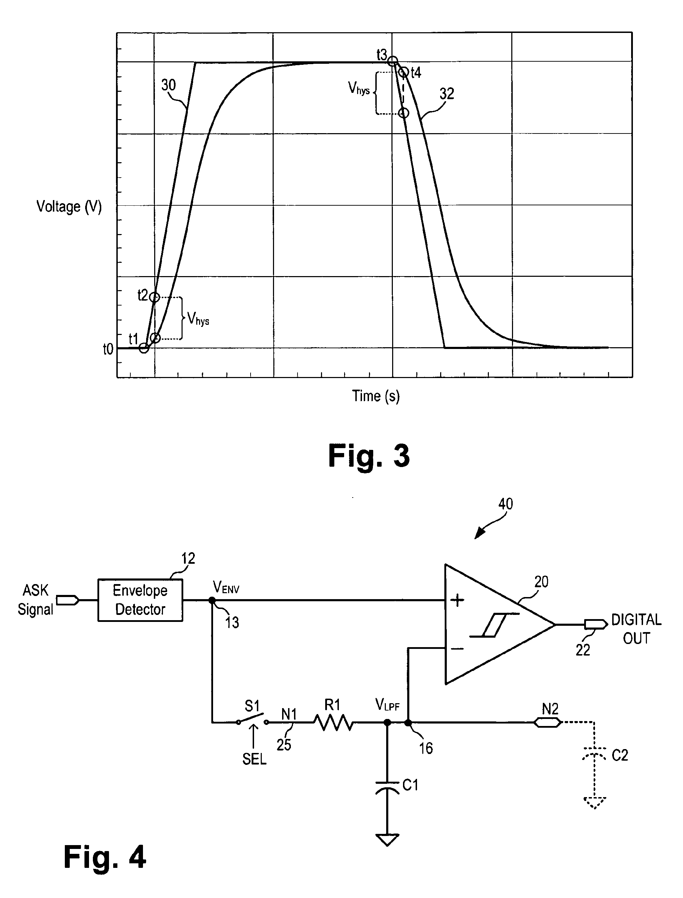

The operation of mode 3 is described with reference to Figure 3 which illustrates an exemplary envelope signal and the associated filtered signal provided as input signals to comparator 20. First, it is assumed that at time t0, the envelope signal V_{ENV} is at a logical "0" level. The digital output of comparator 20 is stable at a logical "0" level as well. Then, at time t1, the envelope signal V_{ENV} starts to rise to a logical "1" level. The filtered voltage V_{LPF} also starts to rise in response but at a slower rate due to the filtering function. A voltage difference between the two input terminals of comparator 20 develops as a result of the filtered signal V_{LPF} rising slower than the envelope signal V_{ENV}. The digital output of comparator 20 remains at a logical "0" as the hysteresis voltage V_{hys} must be overcome before comparator 20 can change state.

At time t2, the voltage difference between the envelope signal V_{ENV} and the filtered signal V_{LPF} becomes equal to or greater than the hysteresis voltage V_{hys}. Comparator 20 thus changes state and switches to provide a logical "1" as the digital output signal.

The operation is the same when the envelope signal V_{ENV} switches back to a logical "0" state. Thus, at time t3, the envelope signal V_{ENV} starts to fall to a logical "0" level. The filtered signal V_{LPF} also starts to fall in response but at a slower rate due to the filtering function. A voltage difference between the two input terminals of comparator 20 develops. The digital output of comparator 20 remains at a logical "1" as the hysteresis voltage V_{hys} must be overcome before comparator 20 can change state. At time t4, the voltage difference between the envelope signal V_{ENV} and the filtered signal V_{LPF} becomes equal to or greater than the hysteresis voltage V_{hys}. Comparator 20 thus changes state and switches to provide a logical "0" as the digital output signal.

According to another embodiment of the present invention, the ASK demodulator is implemented using a comparator with programmable hysteresis. Thus the hysteresis voltage V_{hys} can be programmed by the user depending on the application requirements. Furthermore, in an alternate embodiment, the hysteresis of the comparator can be programmably switched off (that is, voltage V_{hys} is set to 0 volt) when mode 1 or mode 2 operation is selected.

In yet another embodiment, resistor R1 can be a programmable resistor. Alternately, capacitor C1 can be a programmable capacitor. Furthermore, in ASK demodulator 10 of Figure 1, the low-pass filter is formed using a resistor and a capacitor. In other embodiments, the low-pass filter can be implemented using other filter topologies, such as switched capacitor filters.

Furthermore, in the embodiment shown in Figure 1, the position of resistor R1 and switch S1 can be switched without affecting the functionality of the demodulator. Figure 4 is a schematic diagram of a demodulator for amplified shift keyed signals according to a second embodiment of the present invention. Referring to Figure 4, switch S1 is connected between node 13 being the output terminal of the envelope detector 12 and a node N1 (or node 25). Resistor R1 is connected between node N1 and a node 16 also denoted as node N2) which is also the inverting input terminal of comparator 20. Capacitor C1 is connected between the inverting input terminal (node 16) of comparator 20 and the ground node. ASK demodulator 40 of Figure 4 operates in the same manner as the ASK demodulator of Figure 1. The exact arrangement of resistor R1 and switch S1 in the ASK demodulator of the present invention is not critical to the practice of the present invention.

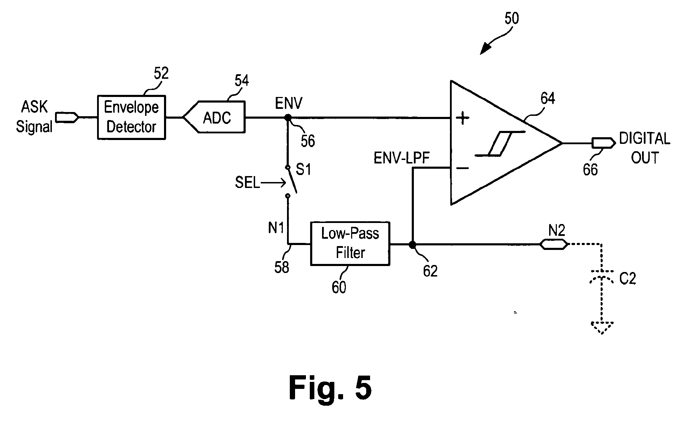

In the above-described embodiments, the ASK demodulator of the present invention operates in the analog domain. According to other embodiments of the present invention, the ASK demodulator can operate in the digital domain as well by digitizing the envelope signal. Figure 5 is a schematic diagram of a demodulator for amplified shift keyed signals according to a third embodiment of the present invention. Referring to Figure 5, an ASK demodulator 50 for demodulating an amplifier shift keyed signal (ASK signal) includes an envelope detector 52, an analog-to-digital converter (ADC) 54, a selection switch Sl, a digital low-pass filter 60 and a digital comparator 64. ASK demodulator 50 receives an incoming ASK signal in which the amplitude of a carrier oscillation is switched between two states in accordance with a binary data message. ASK demodulator 50 operates in the same manner as ASK demodulators 10 and 40 to generate a digital output signal indicative of the binary data message encoded in the ASK signal.

ASK demodulator can be implemented using digital hardware. Alternately, once the envelope signal is digitized, the envelope signal can be processed using software that implements the circuit functionality of the selection switch S1, the low-pass filter 60 and the digital comparator 64 of the ASK demodulator 50. The exact nature of ASK demodulator implementation is not critical to the practice of the present invention and ASK demodulator 50 can be implemented in hardware or software.

In operation, envelope detector 52 generates an envelope signal 6 from the incoming ASK signal 4 (Figure 2) indicative of the data content of the ASK signal. The envelope signal 6 is digitized by ADC 54 to generate a digitized envelope signal ENV at node 56. The digitized envelope signal ENV is provided to the non-inverting input terminal of digital comparator 64. Meanwhile, the digitized envelope signal ENV is also provided to digital low-pass filter 60 through selection switch S1. Selection switch S1 is controlled by a control signal SEL in the same manner as described above to cause ASK demodulator to operate in a selected one of the three operation modes. The filtered digitized envelope signal ENV-LPF (node 62) is coupled to the inverting input terminal of digital comparator 64. Digital comparator 64 is a comparator with hysteresis and generates the digital output signal 8 indicative of the data message from the envelope signal 6 (Figure 2). More specifically, comparator 64 with hysteresis compares the digitized envelope signal ENV on node 56 to the filtered digitized envelope signal ENV-LPF on node 62 using high and low voltage comparison thresholds. The difference between the high and low voltage comparison thresholds is a hysteresis voltage value of V_{hys}. Comparator 64 generates the digital output signal on a terminal 66 indicative of the data content of the ASK signal.

The above detailed descriptions are provided to illustrate specific embodiments of the present invention and are not intended to be limiting. Numerous modifications and variations within the scope of the present invention are possible. The present invention is defined by the appended claims.

## Claims

1. A demodulator for demodulating an amplified shift keyed (ASK) signal to provide a digital output signal indicative of the ASK signal, the demodulator comprising:
an envelope detector having an input terminal receiving the ASK signal and an output terminal generating an envelope signal indicative of the data content encoded in the ASK signal;
a low-pass filter coupled to receive the envelope signal and generating a filtered envelope signal;
a switch coupled to disengage the low-pass filter in response to a first control signal; and
a comparator with hysteresis having a non-inverting input terminal coupled to receive the envelope signal, an inverting input terminal coupled to a first terminal and receiving the filtered envelope signal, and an output terminal providing the digital output signal,
wherein the switch is open or close in response to the first control signal to cause the demodulator to operate in one of a plurality of operation modes.

2. The demodulator of claim 1, wherein the low-pass filter comprises:
a first resistor having a first resistance value coupled between the output terminal of the envelope detector and a first node; and
a capacitor having a first capacitance value coupled between the inverting input terminal of the comparator and a ground node,
wherein the switch is coupled between the first node and the inverting input terminal of the comparator.

3. The demodulator of claim 1, wherein the low-pass filter comprises:
a first resistor having a first resistance value coupled between a first node and the inverting input terminal of the comparator; and
a capacitor having a first capacitance value coupled between the inverting input terminal of the comparator and a ground node,
wherein the switch is coupled between the output terminal of the envelope detector and the first node.

4. The demodulator of claim 2 or 3, wherein a first operation mode is selected by closing the switch and coupling a second capacitor having a second capacitance value to the first terminal, the second capacitance value being much greater than the first capacitance value.

5. The demodulator of claim 4, wherein the resistor, the first capacitor and the second capacitor form a low-pass filter, the cut-off frequency of the low-pass filter being low as compared to the bit rate of the ASK signal, the low-pass filter providing a filtered envelope signal to the inverting input terminal of the comparator.

6. The demodulator of claim 4 or 5, wherein a second operation mode is selected by closing and opening the switch periodically and coupling a second capacitor having a second capacitance value to the first terminal, the second capacitance value being much greater than the first capacitance value.

7. The demodulator of claim 6, wherein a third operation mode is selectively closing the switch and, in the third operation mode, the slew rate of the signal at the inverting input terminal of the comparator is lower than the slew rate at the non-inverting input terminal of the comparator and the amplitude of the signal at the non-inverting input terminal of the comparator is greater than a hysteresis voltage of the comparator.

8. The demodulator of any preceding claim, wherein the envelope detector comprises an edge detector.

9. The demodulator of any preceding claim, further comprising:
an analog-to-digital converter coupled to the output terminal of the envelope detector, the analog-to-digital converter providing a digitized envelope signal,
wherein the low-pass filter comprises a digital low-pass filter and the comparator with hysteresis comprises a digital comparator with hysteresis.

10. A method for demodulating an amplitude shift keyed (ASK) signal and generating a digital output signal, comprising:
receiving an ASK signal;
detecting the envelope of the ASK signal;
generating an envelope signal indicative of the data content of the ASK signal;
low-pass filtering the envelope signal to generate a filtered envelope signal, the low-pass filtering having a selectable cut-off frequency;
coupling the envelope signal to a non-inverting input terminal and selectively coupling the filtered envelope signal to an inverting input terminal of a comparator with hysteresis; and
generating the digital output signal at an output terminal of the comparator indicative of the data content of the ASK signal.

11. The method of claim 10, wherein:
low-pass filtering the envelope signal to generate a filtered envelope signal comprises low-pass filtering at a cut-off frequency being at or greater than the bit rate of the ASK signal; and
selectively coupling the filtered envelope signal to an inverting input terminal of a comparator with hysteresis comprises coupling the filtered envelope signal to the inverting input terminal of a comparator with hysteresis.

12. The method of claim 10, wherein:
low-pass filtering the envelope signal to generate a filtered envelope signal comprises low-pass filtering at a cut-off frequency being lower than the bit rate of the ASK signal; and
selectively coupling the filtered envelope signal to an inverting input terminal of a comparator with hysteresis comprises coupling the filtered envelope signal to the inverting input terminal of a comparator with hysteresis.

13. The method of claim 12, wherein receiving an ASK signal comprises receiving an ASK signal having approximately equal numbers of 1's and 0's.

14. The method of claim 10 or 11, wherein low-pass filtering the envelope signal to generate a filtered envelope signal comprises low-pass filtering at a cut-off frequency being lower than the bit rate of the ASK signal, the method further comprising:
sampling the filtered envelope signal onto a first storage node;
coupling the sampled filtered envelope signal to the inverting input terminal of the comparator;
disengaging the low-pass filtering of the envelope signal; and
periodically engaging the low-pass filtering of the envelope signal and resampling the filtered envelope signal onto the first storage node.

15. The method of any of claims 10 to 14, further comprising:
after generating the envelope signal, digitizing the envelope signal.
